# EUROPÄISCHE PATENTANMELDUNG

(11) **EP 0 894 668 A2**
(43) Veröffentlichungstag der Anmeldung: **03.02.1999**
(21) Anmeldenummer: 98113239.2
(22) Anmeldetag: 16.07.1998
(51) Int. Cl.: B60Q 3/02

(54) **Luftkanaldeckenleuchte für Grossraumfahrzeuge, insbesondere Omnibusse**

(30) Priorität: 01.08.1997 DE 19733229
(71) Anmelder: HAPPICH Fahrzeug- und Industrieteile GmbH, 42285 Wuppertal (DE); DAIMLER-BENZ AKTIENGESELLSCHAFT, 70546 Stuttgart (DE)
(72) Erfinder: Jäckel, Helmut, 42553 Velbert (DE); Krings, Heinz, 71394 Kernen (DE); Schürer, Wulf, 45966 Gladbeck (DE)

(57) **Zusammenfassung**

Beschrieben wird eine Luftkanaldeckenleuchte für Großraumfahrzeuge, insbesondere Omnibusse, mit einem Glühlampenträger (1), einer Blendscheibe (2), die sich in Fahrzeuglängsrichtung erstreckt, mit einem Längsrand an einem ersten Luftkanalprofil (7) angelenkt ist und am anderen Längsrand über Haltemittel lösbar an einem zweiten Luftkanalprofil (8) befestigt ist und mit einem sich parallel zur Blendscheibe (2) erstreckenden Reflektor (3), die sich durch einen lediglich zweiteiligen, den Glühlampenträger (1) einerseits und die Blendscheibe (2) mit Reflektor (3) und Haltemittel andererseits umfassenden Aufbau auszeichnet.

## Beschreibung

Die Erfindung bezieht sich auf eine Luftkanaldeckenleuchte für Großraumfahrzeuge, insbesondere Omnibusse, mit einem Glühlampenträger, einer Blendscheibe, die sich in Fahrzeuglängsrichtung erstreckt, mit einem Längsrand an einem ersten Luftkanalprofil angelenkt ist und am anderen Längsrand über Haltemittel lösbar an einem zweiten Luftkanalprofil befestigt ist und mit einem sich parallel zur Blendscheibe erstreckenden Reflektor.

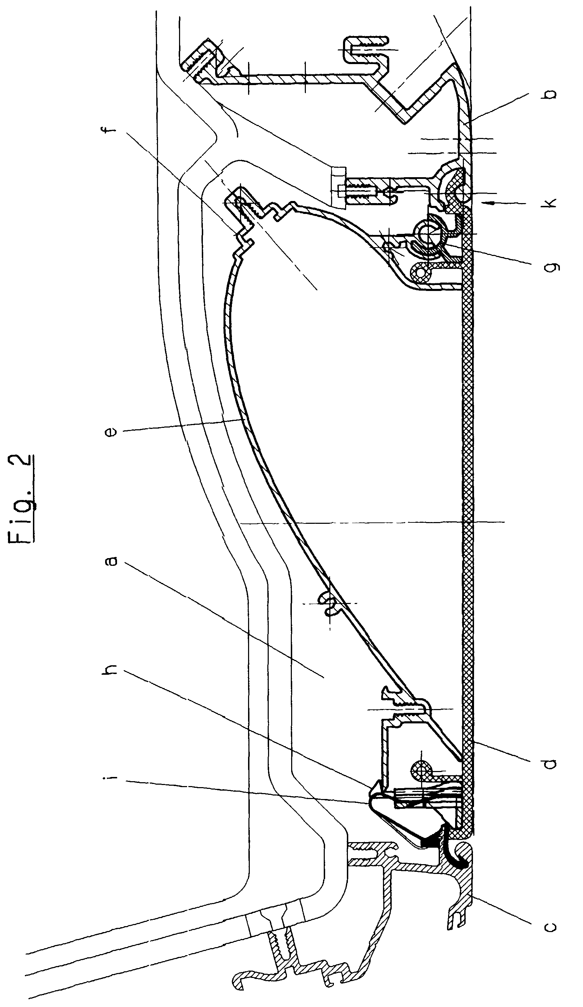

Eine durch offenkundige Benutzung bekanntgewordene Luftkanaldeckenleuchte der vorgenannten Art weist einen sich aus vielen Einzelteilen, auch unterschiedlichen Materials zusammensetzenden Aufbau auf. Die bekannte Luftkanaldeckenleuchte ist damit aufwendig in der Herstellung und Montage und bereitet auch Schwierigkeiten beim Wechseln von Lichtquellen. Eine Luftkanaldeckenleuchte der herkömmlichen Art ist in Fig. 2 der anliegenden Zeichnungen gezeigt, wobei eine Anordnung im inneren Luftkanal a zwischen einem ersten Luftkanalprofil b und einem zweiten Luftkanalprofil c vorgesehen ist. Im einzelnen umfaßt die bekannte Luftkanaldeckenleuchte eine Blendscheibe d, einen Reflektor e mit integriertem Glühlampenträger f, ein Scharnierprofil g zwischen der Blendscheibe d und dem Reflektor e, erste Haltemittel h zur Festlegung des Reflektors e an der Blendscheibe d und zweite Haltemittel i zur Festlegung der aus Blendscheibe d und Reflektor e bestehenden Einheit am zweiten Luftkanalprofil c. Die Einheit ist zudem über eine Scharnierausbildung k am ersten Luftkanalprofil b festgelegt. Die genannten Einzelteile müssen separat gefertigt und zusammengefügt werden, was kostenaufwendig und arbeitsintensiv ist. Der Wechsel einer defekten Lichtquelle, wie Glühlampe gestaltet sich ebenfalls aufwendig und schwierig, weil zunächst die Haltemittel i gelöst werden müssen, um die Blendscheibe d um die Scharnierausbildung k nach unten schwenken zu können und danach die Haltemittel h gelöst werden müssen um den Reflektor e um die Scharnierleiste g nach oben und damit von der Blendscheibe d wegschwenken zu können. Erst nach dieser Prozedur werden die am Glühlampenträger f angeordneten Glühlampen erreichbar.

Der Erfindung liegt daher ausgehend von einer Luftkanaldeckenleuchte der eingangs genannten Art die Aufgabe zugrunde, Vorsorge dafür zu treffen, daß diese durch Einsparung von Einzelteilen besonders einfach und kostengünstig herzustellen und zu montieren ist und weiterhin Vorsorge dafür zu treffen, daß ein Glühlampenwechsel schnell und problemlos durchgeführt werden kann.

Diese Aufgabe löst die Erfindung durch einen lediglich zweiteiligen, den Glühlampenträger einerseits und die Blendscheibe mit Reflektor und Haltemittel andererseits umfassenden Aufbau.

Die Bereitstellung von lediglich zwei Bauteilen vereinfacht die Fertigung und insbesondere die Montage wie auch die Lagerhaltung. Im Gegensatz zum bekannten Vorbild ist der mit Glühlampen bestückbare Glühlampenträger ein separat gefertigtes und separat an Luftkanalstützen oder an einem Luftkanalprofil montierbares Bauteil. Dieses Bauteil kann aus einem durchlaufenden Leistenstrang bestehen oder auch aus in Reihe nebeneinander anzuordnender Teilelemente.

Von besonderem Vorteil ist die Maßnahme, daß das die Blendscheibe, den Reflektor und das Haltemittel umfassende Bauteil einstückig und materialeinheitlich ausgebildet ist, wobei bevorzugt vorgesehen ist, daß dieses Bauteil aus dem Abschnitt eines Kunststoff-Extrusionsprofils besteht.

Gemäß einer Weiterbildung der Erfindung ist vorgesehen, daß das am zweiten, die Blendscheibe und den Reflektor aufweisende Bauteil angeordnete Haltemittel als daran durchlaufend angeformte Federleiste ausgebildet ist, die einen Steg eines Luftkanalprofils zu hinterschnappen vermag. Die Herstellung, Bereitstellung und Montage einzelner Befestigungselemente in Form von Klammern, Federn und dgl. kann daher entfallen.

Eine staubdichte Abdichtung der Leuchteneinheit wird dadurch erreicht, daß der Reflektor unter dichtender Anlage nach Art einer Nut-/Federverbindung in den eine rinnenförmige Aufnahme aufweisenden Glühlampenträger eingreift.

Die erfindungsgemäße Luftkanaldeckenleuchte kommt mit lediglich einer Scharnierausbildung und einer zu entrastenden Federleiste zum Abklappen der Blendscheibe mit dem daran einstückig angeordneten Reflektor aus, um auf diese Weise die am Glühlampenträger angeordneten Glühlampen zugänglich zu machen. Damit bereitet ein Glühlampenwechsel keine Schwierigkeiten mehr.

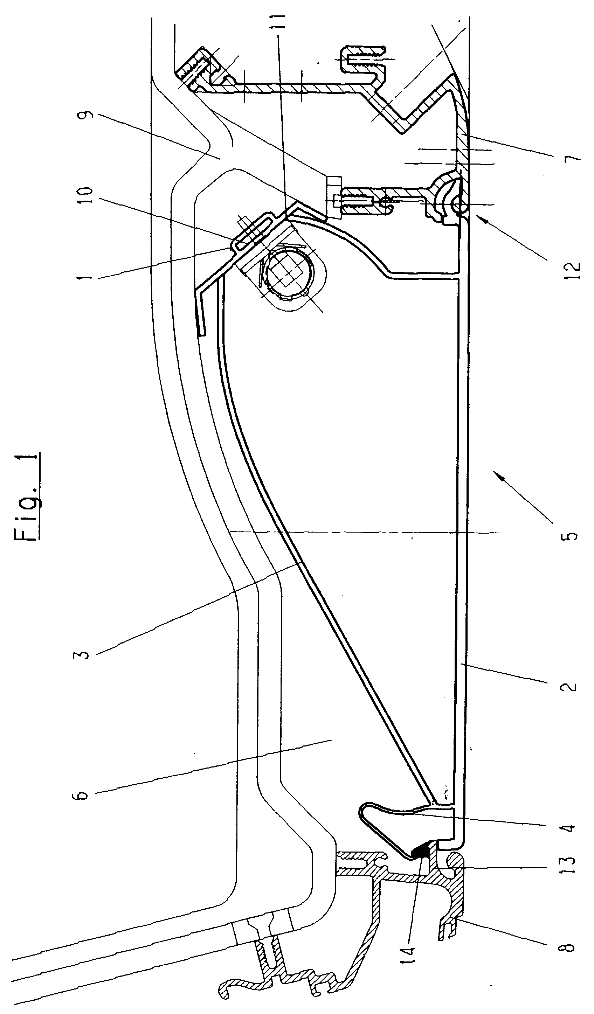

Ein Ausführungsbeispiel der Erfindung ist in Fig. 1 der Zeichnung in einer vertikalen Schnittdarstellung durch die Luftkanaldeckenleuchte gezeigt und wird im folgenden näher erläutert:

Die neue Luftkanaldeckenleuchte besteht aus einer zweiteiligen Leuchteneinheit, die aus einem Glühlampenträger 1 und einem eine Blendscheibe 2, einen Reflektor 3 und eine Federleiste 4 umfassenden Bauteil 5 gebildet ist. Die Luftkanaldeckenleuchte ist in einem Luftkanal 6, wie er in einem Omnibus oder dgl. Großraumfahrzeug oberhalb der linken und rechten Sitzreihen üblicherweise vorgesehen ist, durchlaufend angeordnet. Zum Luftkanal 6 gehören ein erstes Luftkanalprofil 7, ein zweites Luftkanalprofil 8 sowie eine Reihe von Luftkanalstützen 9. Diese Bauteile sind herkömmlicher Art und bedürften keiner näheren Erläuterung.

Der Glühlampenträger 1 ist zweckmäßigerweise ein Abschnitt eines Strangpreßprofils aus Metall, wie Aluminium oder aus Kunststoff und mittels Schrauben an den Luftkanalstützen 9 in nicht näher dargestellter Weise festgelegt. Der Glühlampenträger 1 weist eine hinterschnittene Nut 10 für die Anordnung von Leuchtmitteln (nicht gezeigt) und eine rinnenförmige Aufnahme 11 für den Eingriff des Reflektors 3 auf. Die Wandungen der rinnenförmigen Aufnahme 11 des Glühlampenträgers 1 stützen sich an den Luftkanalstützen 9 ab.

Das Bauteil 5 besteht vorzugsweise aus dem Abschnitt eines Kunststoff-Extrusionsprofils, weist ein geringes Gewicht auf und ist sortenrein zu recyceln. Die Blendscheibe 2 ist längs eines Randbereichs über eine Scharnierausbildung 12 in angelenkter Anordnung am ersten Luftkanalprofil 7 festgelegt und längs ihres anderen Randbereichs am zweiten Luftkanalprofil 8 gehalten, und zwar über die einstückig an die Blendscheibe 2 angeformte Federleiste 4, die einen Steg 13 des Lunftkanalprofils 8, welcher ein Dichtungsprofil 14 trägt, zu hinterschnappen vermag. Ebenfalls einstückig mit der Blendscheibe 2 ist der Reflektor 3, der zum Glühlampenträger 1 hin konisch zuläuft und unter dichtender Anlage in die rinnenförmige Aufnahme 11 eingreift. Der Reflektor 3 kann innen- und/oder außenseitig mit einer Licht reflektierenden Lackierung oder Beschichtung versehen sein, während die Blendscheibe 2 transparent oder transluzent ausgebildet ist. Es ist ohne weiteres denkbar, das Bauteil 5 nach Art eines Zweimediumprofils auszubilden mit einem ersten lichtdurchlässigen Material für die Blendscheibe 2 und einem hell z. B. weiß eingefärbten Material für den Reflektor 3.

Für einen Glühlampenwechsel ist lediglich das Bauteil 5 um die Scharnierausbildung 12 herum nach unten hin abzuklappen. Hierfür ist die Federleiste 4 mittels eines geeigneten Werkzeugs durch nicht gezeigte Durchbrüche in der Blendscheibe 2 hindurch aus der dargestellten Raststellung heraus in eine Entrastungsposition zu bewegen. Der Klappbewegung der Blendscheibe 2 folgt natürlich der damit einstückige Reflektor 3, so daß die Glühlampen hiernach frei zugänglich sind.

## Patentansprüche

1. Luftkanaldeckenleuchte für Großraumfahrzeuge, insbesondere Omnibusse, mit einem Glühlampenträger (1), einer Blendscheibe (2), die sich in Fahrzeuglängsrichtung erstreckt, mit einem Längsrand an einem ersten Luftkanalprofil (7) angelenkt ist und am anderen Längsrand über Haltemittel lösbar an einem zweiten Luftkanalprofil (8) befestigt ist und mit einem sich parallel zur Blendscheibe (2) erstreckenden Reflektor (3), gekennzeichnet durch einen lediglich zweiteiligen, den Glühlampenträger (1) einerseits und die Blendscheibe (2) mit Reflektor (3) und Haltemittel andererseits umfassenden Aufbau.

2. Luftkanaldeckenleuchte nach Anspruch 1, dadurch gekennzeichnet, daß der mit Glühlampen bestückbare Glühlampenträger (1) ein separat gefertigtes und separat an Luftkanalstützen (9) oder an einem Luftkanalprofil (7) montierbares Bauteil ist.

3. Luftkanaldeckenleuchte nach Anspruch 1 oder 2, dadurch gekennzeichnet, daß das die Blendscheibe (2), den Reflektor (3) und das Haltemittel umfassende Bauteil (5) einstückig und materialeinheitlich ausgebildet ist.

4. Luftkanaldeckenleuchte nach mindestens einem der Ansprüche 1 bis 3, dadurch gekennzeichnet, daß das die Blendscheibe (2), den Reflektor (3) und das Haltemittel umfassende Bauteil (5) aus dem Abschnitt eines Kunststoff-Extrusionsprofils besteht.

5. Luftkanaldeckenleuchte nach wenigstens einem der Ansprüche 1 bis 4, dadurch gekennzeichnet, daß das am zweiten Bauteil (5) vorgesehene Haltemittel als daran durchlaufend angeformte Federleiste (4) ausgebildet ist, die einen Steg (13) des Luftkanalprofils (8) zu hinterschnappen vermag.

6. Luftkanaldeckenleuchte nach mindestens einem der Ansprüche 1 bis 5, dadurch gekennzeichnet, daß der Reflektor (3) unter dichtender Anlage nach Art einer Nut-/Federverbindung in den eine rinnenförmige Aufnahme (11) aufweisenden Glühlampenträger (1) eingreift.
